# EUROPEAN PATENT APPLICATION

(11) **EP 4 484 053 A1**
(43) Date of publication of application: **01.01.2025**
(21) Application number: 23760037.4
(22) Date of filing: 22.02.2023
(51) Int. Cl.: B23Q 7/10

(54) **STOCKER AND CUTTING MACHINE**

(30) Priority: 24.02.2022 JP 2022026511
(71) Applicant: DGSHAPE Corporation, Hamamatsu-shi, Shizuoka 431-2103 (JP)
(72) Inventor: SAKURAI Takayuki, Hamamatsu-shi, Shizuoka 431-2103 (JP); OWADA Koji, Hamamatsu-shi, Shizuoka 431-2103 (JP); MIYAMOTO Kazuhito, Hamamatsu-shi, Shizuoka 431-2103 (JP); DODO Shinpei, Hamamatsu-shi, Shizuoka 431-2103 (JP)
(74) Representative: Grünecker Patent- und Rechtsanwälte PartG mbB
(86) International application number: PCT/JP2023/006443
(87) International publication number: WO 2023/163038

(57) **Abstract**

A user can easily store a workpiece in a storage portion of a stocker. A stocker 200 is a stocker in which a workpiece 5 is stored in a cutting machine 100 that cuts the workpiece 5. The stocker 200 includes a stocker body 201 and a storage portion 210 that is arranged in the stocker body 201 and in which one workpiece 5 is stored. The storage portion 210 includes a passage opening 211 that is opened in a predetermined opening direction and through which the workpiece 5 passes, a passage 213 that communicates with the passage opening 211 and through which the workpiece 5 that has passed through the passage opening 211 passes, and a mounting portion 215 that is provided below the passage 213 and on which the workpiece 5 is mounted so that a position of the workpiece 5 is fixed.

## Description

### TECHNICAL FIELD

The present invention relates to a stocker and a cutting machine.

### BACKGROUND ART

For example, in Patent Document 1, a cutting machine that cuts a workpiece that is a target of cutting into a desired shape is disclosed. The cutting machine includes a storage device, a cutting device, a conveyance device, and a control device. The storage device includes a stocker that can store multiple disk-like workpieces in a state where an adapter is attached to each of the workpieces. The cutting device cuts the workpiece. The conveyance device grips the adapter and conveys the workpiece from the storage device to the cutting device. The control device executes conveyance and cutting of the workpiece in accordance with a processing program.

The stocker of the storage device includes a storage portion in which one workpiece is stored. Multiple storage portions are provided in the stocker. Therefore, it is possible to store multiple workpieces in the stocker.

### CITATION LIST

### PATENT DOCUMENT

Patent Document 1: Japanese Laid-open Publication No. 2021-170230

### SUMMARY OF THE INVENTION

### PROBLEMS TO BE SOLVED BY INVENTION

Incidentally, a user manually stores and takes out the workpiece in and from the storage portion of the stocker. In the cutting machine disclosed in Patent Document 1, the workpiece is stored in the storage portion by fitting the workpiece to the storage portion. Therefore, when storing the workpiece in the storage portion, the user needs a force to make the workpiece fitted thereto. Also, when taking out the workpiece fitted to the storage portion, the user needs a force to pull out the workpiece. It is preferable to the user that the user can more easily store the workpiece in the storage portion when storing the workpiece in the storage portion.

In view of the foregoing, the present invention has been devised, and it is therefore an object of the present invention to provide a stoker and a cutting machine in which, when a user manually stores a workpiece in a storage portion of a stocker, a workpiece can be easily stored in the storage portion.

### SOLUTION TO PROBLEM

A stocker according to the present invention is a stocker in which a workpiece is stored in a cutting machine that cuts the workpiece. The stocker includes a stocker body and a storage portion that is arranged in the stocker body and in which one workpiece is stored. The storage portion includes a passage opening, a passage, and a mounting portion. The passage opening is opened in a predetermined opening direction and the workpiece passes through the passage opening. The passage communicates with the passage opening and the workpiece that has passed through the passage opening passes through the passage. The mounting portion is provided below the passage, and the workpiece is mounted on the mounting portion, so that a position of the workpiece is fixed.

According to the stocker described above, when a user manually stores the workpiece in the storage portion, the user inserts the workpiece in the storage portion through the passage opening of the storage portion in a state where the user grasps the workpiece by a hand. At this time, the workpiece that has passed through the passage opening passes through the passage in the storage portion. Then, in a state where the workpiece passes through the passage, the user releases the hand from the workpiece. Thus, the workpiece is fixed in a state where the workpiece has moved downward to be mounted on the mounting portion. Accordingly, the user can store the workpiece in the storage portion with needing a less force than in a conventional case. Therefore, the workpiece can be easily manually stored in the storage portion.

### ADVANTAGEOUS EFFECTS OF INVENTION

According to the present invention, a stoker and a cutting machine in which, when a user manually stores a workpiece in a storage portion of a stocker, the workpiece can be easily stored in the storage portion can be provided.

### BRIEF DESCRIPTION OF THE DRAWINGS

FIG. 1 is a perspective view illustrating a cutting machine according to a preferred embodiment.
FIG. 2 is a plan view illustrating a workpiece to which an adapter is attached.
FIG. 3 is a front view illustrating the workpiece to which the adapter is attached.
FIG. 4 is a cross-sectional view illustrating a partition wall when viewed from left and is also a schematic view illustrating how a stocker moves from a storage area to a processing area.
FIG. 5 is a front view illustrating a stocker body of the stocker.
FIG. 6 is a right side view illustrating the stocker and is also a view illustrating a state where the stocker is arranged in the storage area.
FIG. 7 is a right side view illustrating the stocker and is also a view illustrating a state where the stocker body of the stocker is arranged in the processing area.
FIG. 8 is a front view schematically illustrating one storage portion.
FIG. 9 is a front view schematically illustrating a state where a workpiece is stored in one storage portion.
FIG. 10 is a perspective view schematically illustrating the storage portion and is also a view illustrating a state where a workpiece is not stored in the storage portion.
FIG. 11 is a right side view schematically illustrating a second lower wall of the storage portion and is also a view illustrating a state where a workpiece slides with respect to an inclined surface.
FIG. 12 is a perspective view schematically illustrating the storage portion and is also a view illustrating a state where a workpiece is stored in the storage portion.

### DETAILED DESCRIPTION OF THE PREFERRED EMBODIMENTS

With reference to the attached drawings, a stocker according to the present invention and a cutting machine including the stocker will be described below. Note that, as a matter of course, a preferred embodiment described herein is not intended to be particularly limiting the present invention.

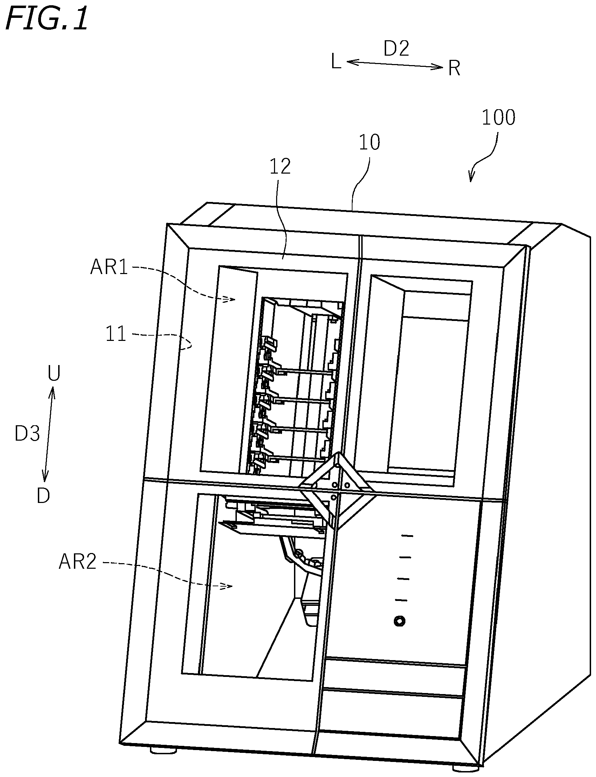

FIG. 1 is a perspective view illustrating a cutting machine 100 according to this preferred embodiment. The reference signs F, Rr, L, R, U and D as used in the drawings refer to front, rear, left, right, up, and down of the cutting machine 100, respectively. The cutting machine 100 is arranged in an XYZ orthogonal coordinate system. Herein, an X-axis direction D1 is a front-rear direction. In this preferred embodiment, the X-axis direction D1 is inclined from a horizontal direction by a predetermined angle. However, the X-axis direction D1 may be the horizontal direction. A Y-axis direction D2 is a left-right direction. A Z-axis direction D3 is an up-down direction. In this preferred embodiment, the Z-axis direction D3 is inclined from a vertical direction only by a predetermined angle. However, the Z-axis direction D3 may be the vertical direction. Note that the directions described above are defined merely for convenience of explanation, do not limit an installation form of the cutting machine 100, and do not limit the present invention.

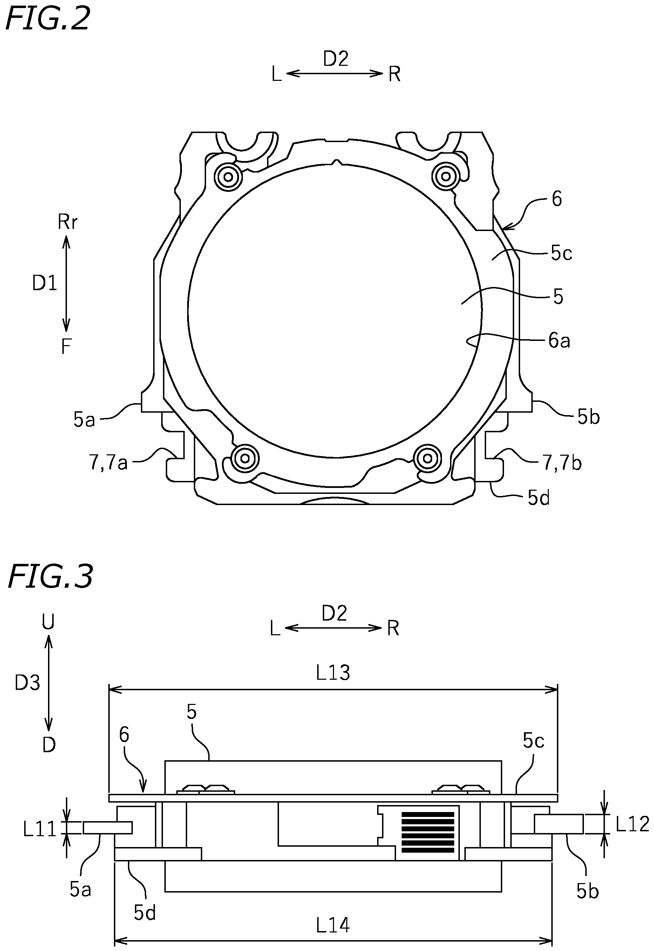

In this preferred embodiment, the cutting machine 100 produces a target object by cutting a workpiece 5 (see FIG. 2). Herein, although there is no particular limitation on a type of the target object, the target object is, for example, a crown prosthesis. Examples of the crown prosthesis include, for example, an inlay, a crown, a bridge, or the like. In this preferred embodiment, the cutting machine 100 is used in the dental field and produces the crown prosthesis from the workpiece 5. However, the field in which the cutting machine 100 is used is not limited to the dental field.

FIG. 2 and FIG. 3 are a plan view and a front view each illustrating the workpiece 5 to which an adapter 6 is attached. As illustrated in FIG. 2 and FIG. 3, the workpiece 5 has, for example, a plate shape that expands in the X-axis direction D1 and the Y-axis direction D2. Herein, the workpiece 5 has a disk shape. The workpiece 5 is made of a type of a material, such as zirconia, a wax, a polymethyl methacrylate resin (PMMA), a hybrid resin, a polyether ether ketone resin (PEEK), plaster, or the like. When zirconia is used as a type of a material of the workpiece 5, for example, semi-sintered zirconia is used. However, there is no particular limitation on the shape and the material of the workpiece 5.

As illustrated in FIG. 1, the cutting machine 100 includes a case body 10. The case 10 has a box shape and includes a space inside.

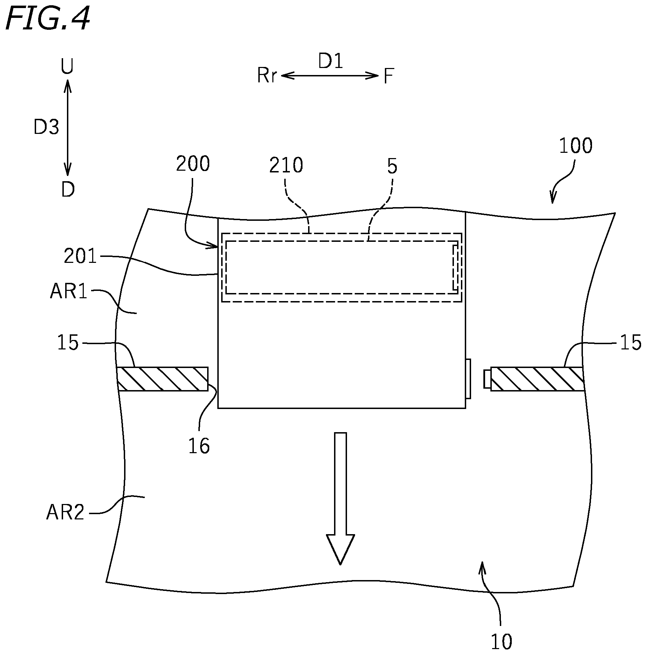

FIG. 4 is a cross-sectional view illustrating a partition wall 15 when viewed from left and is also a schematic view illustrating how a stocker 200 moves from a storage area AR1 to a processing area AR2. As illustrated in FIG. 4, the storage area AR1 and the processing area AR2 are formed in the case body 10. The storage area AR1 is an area in which a user stores the workpiece 5 in a storage portion 210 of the stocker 200 that will be described later. For example, the user grasps the workpiece 5 with a hand and manually stores the workpiece 5 in the storage portion 210 in the storage area AR1.

The processing area AR2 is an area in which the cutting machine 100 cuts the workpiece 5. Herein, the workpiece 5 stored in the stocker 200 in the storage area AR1 moves to the processing area AR2 and cutting is performed on the workpiece 5 in the processing area AR2.

In this preferred embodiment, the storage area AR1 and the processing area AR2 are arranged to be aligned in the Z-axis direction D3. Specifically, the storage area AR1 is arranged above the processing area AR2. However, there is no particular limitation on a positional relation between the storage area AR1 and the processing area AR2. For example, the storage area AR1 may be arranged to be aligned with the processing area AR2 in the X-axis direction D1, and may be arranged to be aligned with the processing area AR2 in the Y-axis direction D2.

In this preferred embodiment, the cutting machine 100 includes the partition wall 15. The partition wall 15 partitions the storage area AR1 and the processing area AR2 from each other. The partition wall 15 is arranged between the storage area AR1 and the processing area AR2. Herein, the partition wall 15 has a plate shape that expands in the X-axis direction D1 and the Y-axis direction D2. In this preferred embodiment, a passage hole 16 is formed in the partition wall 15. The passage hole 16 is a hole through which the stocker 200 passes. Herein, the passage hole 16 is a hole passing through the partition wall 15 in the Z-axis direction D3 and is opened in the Z-axis direction D3. The storage area AR1 and the processing area AR2 communicate with each other through the passage hole 16.

Note that, in this preferred embodiment, as illustrated in FIG. 1, in the case body 10, an opening 11 is formed in a portion of the storage area AR1. The opening 11 is opened forward in the X-axis direction D1. In this preferred embodiment, a forward direction in the X-axis direction D1 is an example of a predetermined opening direction. Herein, a door 12 that freely opens and closes the opening 11 is provided to the case body 10. For example, a left end of the door 12 is supported by the case body 10. The door 12 is configured to be rotatable around the left end and is enabled to open and close the opening 11 by rotating around the left end.

Note that, in this preferred embodiment, although not illustrated, a mechanism that is used in cutting the workpiece 5 is arranged in the processing area AR2. Herein, in the processing area AR2, a clamp that grips the workpiece 5 and a spindle including a tool gripping portion that grips a bar-like processing tool including a blade portion at an edge are provided. The spindle causes the processing tool to rotate around a central axis of the processing tool. In this preferred embodiment, the spindle and the clamp are configured to be movable relatively in a three-dimensional manner in the processing area AR2. In the processing area AR2, while changing the relative positional relation between the spindle and the clamp, the processing tool gripped by the tool gripping portion of the spindle is brought into contact with a desired portion of the workpiece 5 gripped by the clamp and cutting is performed so that the workpiece 5 is cut into a desired shape.

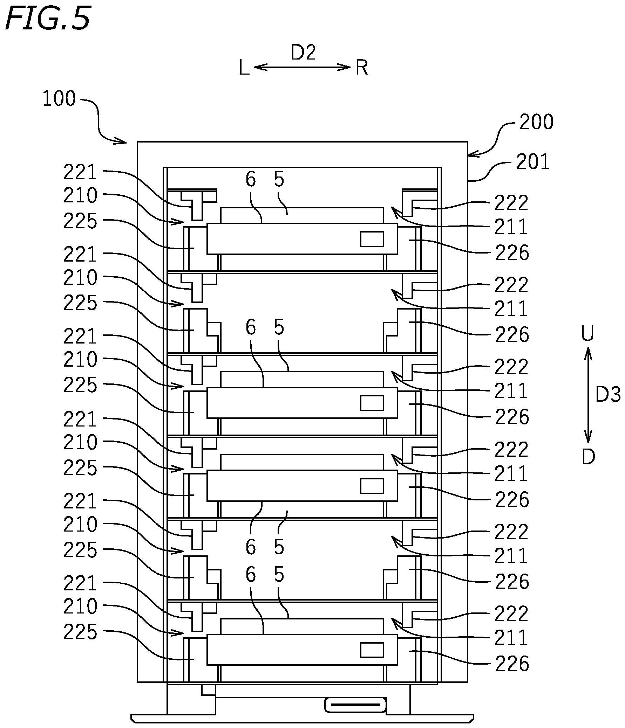

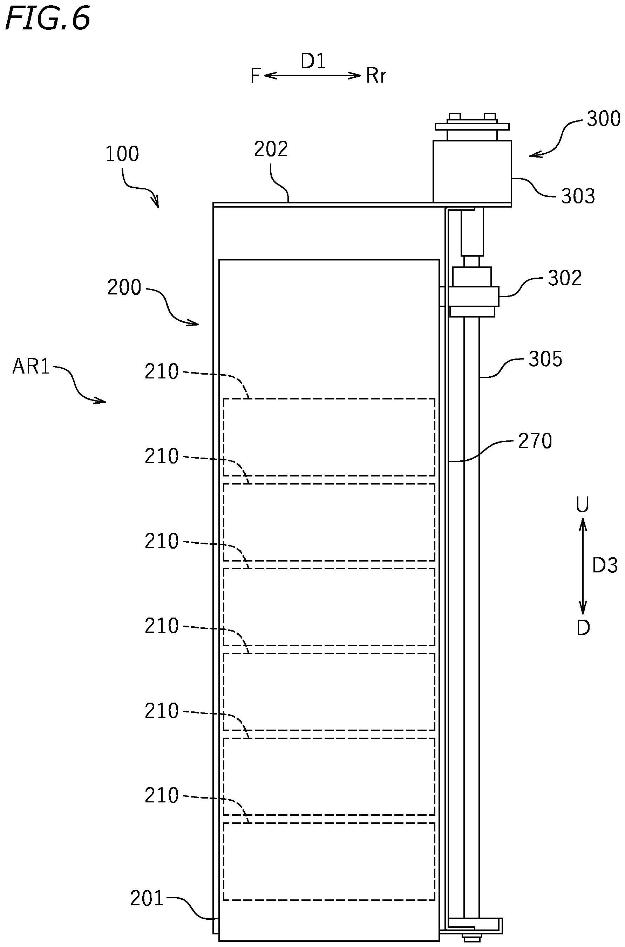

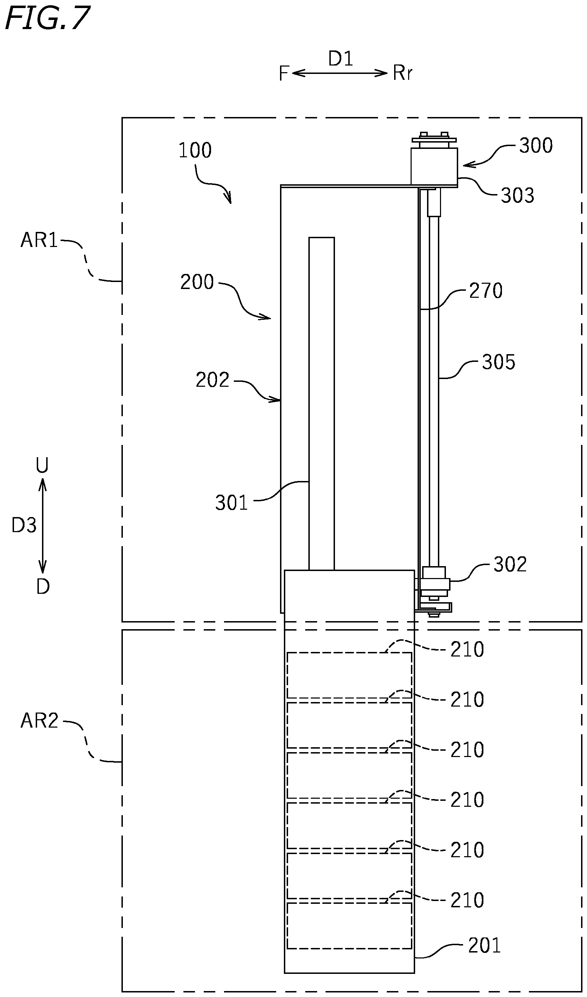

FIG. 5 is a front view illustrating a stocker body 201 of the stocker 200. FIG. 6 and FIG. 7 are right side views each illustrating the stocker 200. In FIG. 6, a state where the stocker 200 is arranged in the storage area AR1 is illustrated, and in FIG. 7, a state where the stocker body 201 of the stocker 200 is arranged in the processing area AR2 is illustrated. As illustrated in FIG. 5, the cutting machine 100 includes the stocker 200. In the cutting machine 100 that cuts the workpiece 5, the workpiece 5 is stored in the stocker 200. Multiple workpieces 5 can be stored in the stocker 200. In this preferred embodiment, six workpieces 5 can be stored in the stocker 200, but there is no particular limitation on the number of the workpieces 5 that are stored in the stocker 200. Note that, in FIG. 5, four workpieces 5 are stored in the stocker 200.

In this preferred embodiment, as illustrated in FIG. 7, the stocker 200 includes the stocker body 201, a stocker cover 202, and the storage portion 210. The stocker body 201 includes a space inside and is opened forward and rearward. The stocker body 201 has a rectangular parallelepiped shape elongated in the Z-axis direction D3. However, there is no particular limitation on a shape of the stocker body 201. As illustrated in FIG. 6, the stocker cover 202 covers the stocker body 201. In this preferred embodiment, the stocker cover 202 includes a space inside and at least a lower portion hereof is opened. Herein, as illustrated in FIG. 6 and FIG. 7, the stocker body 201 is configured to be movable relative to the stocker cover 202 in the Z-axis direction D3. For example, the stocker body 201 is configured to be movable downward in in a state where the stocker body 201 is arranged in the stocker cover 202. When moving downward, the stocker body 201 passes through the opening in a lower portion of the stocker cover 202.

As illustrated in FIG. 5, the workpiece 5 is stored in the storage portion 210. Herein, one workpiece 5 is stored in one storage portion 210. The storage portion 210 is arranged in the stocker body 201. In this preferred embodiment, the multiple storage portions 210 are arranged in the stocker body 201. There is no particular limitation on the number of the storage portions 210. Herein, the number of the storage portions 210 is six. The multiple storage portions 210 are arranged to be aligned in the Z-axis direction D3. The multiple storage portions 210 are arranged in a straight line that extends in the Z-axis direction D3 heading from the storage area AR1 to the processing area AR2. Therefore, in the stocker 200, the multiple workpieces 5 are stored so as to be aligned in the Z-axis direction D3. In the stocker 200, the multiple workpieces 5 are arranged in a straight line that extends in the Z-axis direction D3. Note that a configuration of the storage portion 210 will be described later.

In this preferred embodiment, the stocker 200 is configured to be movable between the storage area AR1 and the processing area AR2. Specifically, the stocker body 201 and the storage portions 210 in the stocker 200 are configured to be movable between the storage area AR1 and the processing area AR2. The stocker cover 202 is arranged in the storage area AR1 and does not move to the processing area AR2. In the following description, the expression "the stocker 200 moves" means that the stocker body 201 and the storage portions 210 move.

As illustrated in FIG. 6, the cutting machine 100 includes a moving mechanism 300. The moving mechanism 300 moves the stocker 200 between the storage area AR1 and the processing area AR2. Herein, the moving mechanism 300 is configured to move the stocker 200 in the Z-axis direction D3. As illustrated in FIG. 4, the stocker 200 passes through the passage hole 16 of the partition wall 15 when moving between the storage area AR1 and the processing area AR2.

Note that there is no particular limitation on a configuration of the moving mechanism 300. As illustrated in FIG. 7, the moving mechanism 300 includes a guide rail 301 and a driving motor 303. The guide rail 301 extends in the Z-axis direction D3. Herein, in a state where the stocker 200 is arranged in the storage area AR1, the guide rail 301 is arranged in a portion of the case body 10 other than in a direction (herein, a forward direction) heading from the stocker 200 to the opening 11. In this preferred embodiment, the guide rail 301 is arranged at each of both left and right sides of the stocker 200 such that the guide rails 301 make a pair. Specifically, the guide rails 301 are arranged on inner surfaces of side walls of the stocker cover 202 at both left and right sides so as to be arranged at left and right of the stocker body 201. Note that, in FIG. 7, the guide rail 301 at the left side is illustrated and the guide rail 301 at the right side is omitted. The guide rails 301 are arranged in the storage area AR1. The stocker body 201 is engaged with the pair of the guide rails 301.

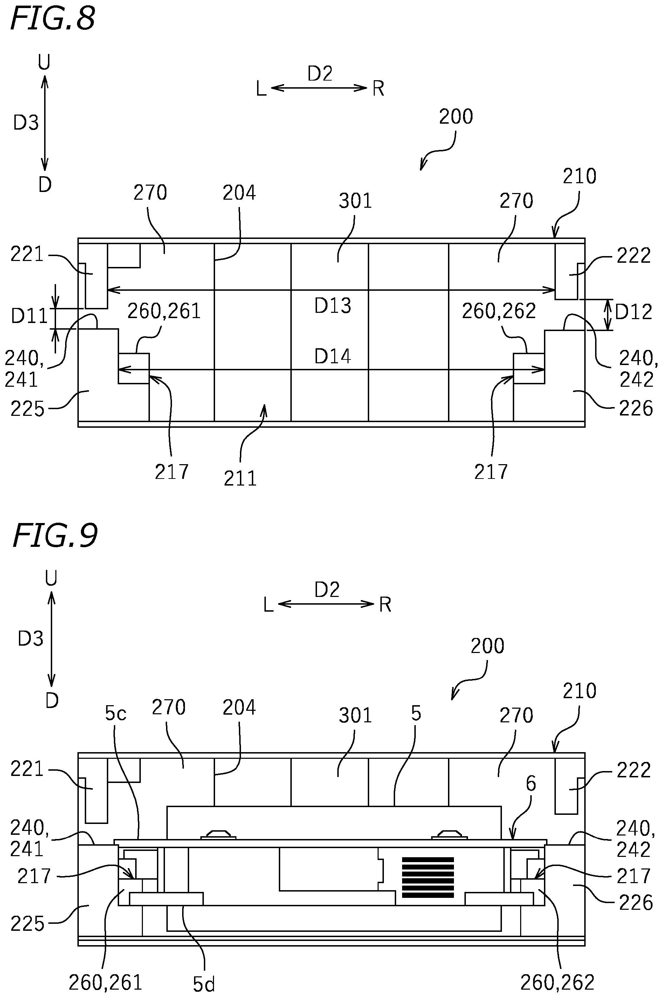

In this preferred embodiment, a ball screw 305 that extends in the Z-axis direction D3 is provided in rear of the stocker body 201. The ball screw 305 is fixed to the stocker cover 202 and is engaged with the stocker body 201. Herein, a nut 302 provided to the stocker body 201 is screwed to the ball screw 305. The nut 302 is fixed to an upper portion of a rear surface of the stocker body 201. Herein, a sliding hole 204 (see FIG. 8) that extends in the Z-axis direction D3 is formed in a rear surface of the stocker cover 202. The nut 302 is fixed to the stocker body 201 through the sliding hole 204. As illustrated in FIG. 6, the driving motor 303 is coupled to the ball screw 305. Herein, when the driving motor 303 drives, the ball screw 305 rotates around a central axis and the stocker body 201 moves along the guide rails 301 in the Z-axis direction D3. As the stocker body 201 moves in the Z-axis direction D3, the storage portion 210 moves in the Z-axis direction D3. In a manner described above, the stocker body 201 and the storage portions 210 move between the storage area AR1 and the processing area AR2.

Next, the configuration of the storage portion 210 of the stocker 200 will be described in detail. As described above, as illustrated in FIG. 5, the multiple storage portions 210 (herein, the six storage portions 210) are arranged to be aligned in the Z-axis direction D3 in the stocker body 201. One workpiece 5 is stored in each one of the storage portions 210. In this preferred embodiment, the multiple storage portions 210 have the same configuration, the same size, or the like.

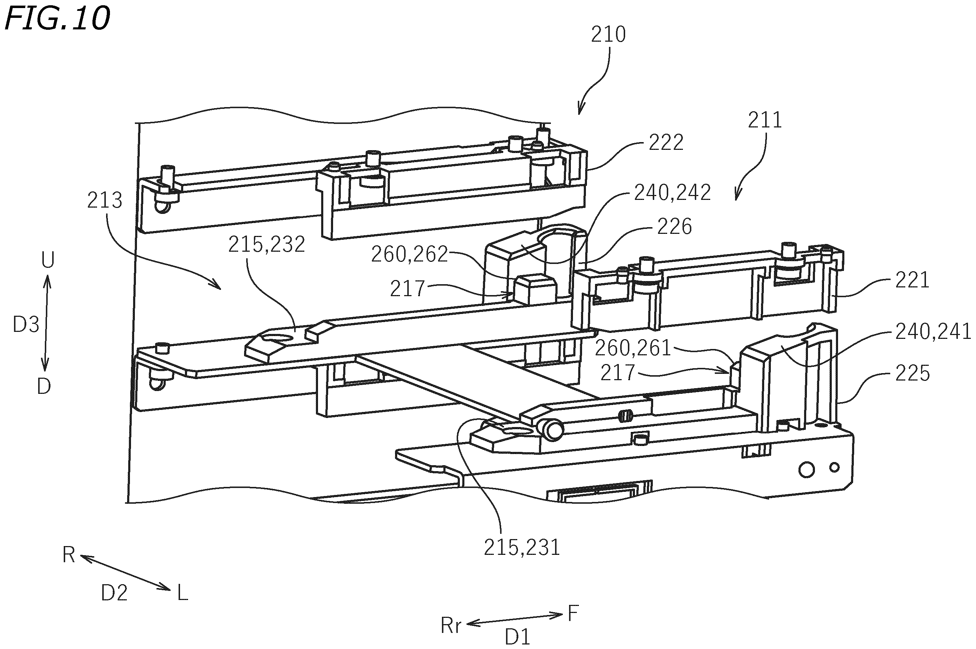

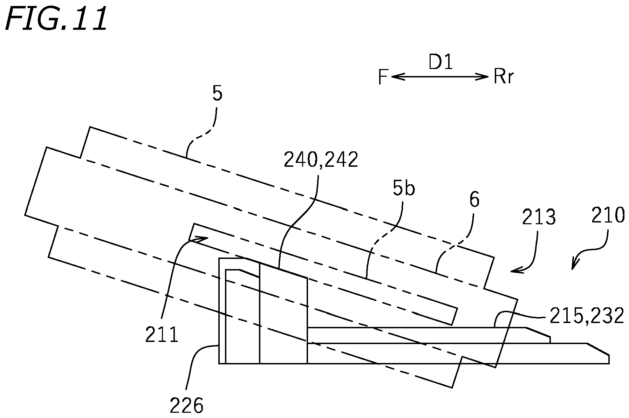

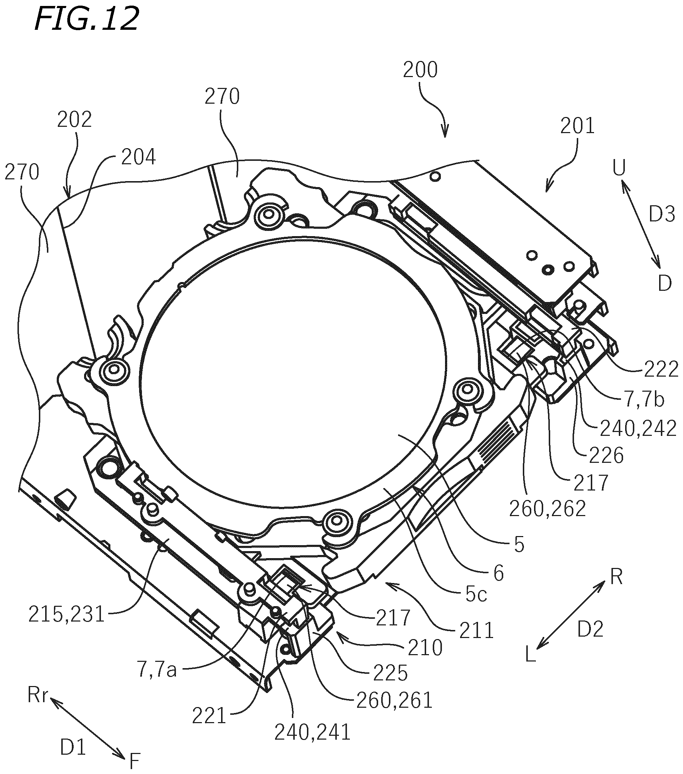

FIG. 8 is a front view schematically illustrating one storage portion 210. FIG. 9 is a front view schematically illustrating a state where the workpiece 5 is stored in one storage portion 210 and is also a view corresponding to FIG. 8. FIG. 10 is a perspective view schematically illustrating the storage portion 210 and is also a view illustrating a state where the workpiece 5 is not stored in the storage portion 210. FIG. 11 is a right side view schematically illustrating a second lower wall 226 of the storage portion 210 and is also a view illustrating a state where the workpiece 5 slides with respect to an inclined surface 240. FIG. 12 is a perspective view schematically illustrating the storage portion 210 and is also a view illustrating a state where the workpiece 5 is stored in the storage portion 210.

As illustrated in FIG. 10, the storage portion 210 includes a passage opening 211, a passage 213, and a mounting portion 215. The passage opening 211 is a portion through which the workpiece 5 passes. The passage opening 211 is opened in a predetermined opening direction. Herein, the opening direction is a front side in the X-axis direction D1. That is, the passage opening 211 is opened forward.

In this preferred embodiment, as illustrated in FIG. 8, the storage portion 210 includes a first upper wall 221, a second upper wall 222, a first lower wall 225, and a second lower wall 226. The first upper wall 221 forms a left upper portion of the storage portion 210. The second upper wall 222 forms a right upper portion of the storage portion 210. Herein, the first upper wall 221 and the second upper wall 222 are arranged so as to be separated from each other in the Y-axis direction D2.

The first lower wall 225 forms a front portion and a left lower portion of the storage portion 210. The first lower wall 225 is opposed to the first upper wall 221 in the Z-axis direction D3 and is separated from the first upper wall 221 in the Z-axis direction D3. The first lower wall 225 is arranged below (herein, directly under) the first upper wall 221. The second lower wall 226 forms a front portion and a right lower portion of the storage portion 210. The second lower wall 226 is opposed to the second upper wall 222 in the Z-axis direction D3 and is separated from the second upper wall 222 in the Z-axis direction D3. The second lower wall 226 is arranged below (herein, directly under) the second upper wall 222. Herein, the first lower wall 225 and the second lower wall 226 are arranged so as to be separated from each other in the Y-axis direction D2.

In this preferred embodiment, the passage opening 211 is an opening surrounded by the first upper wall 221, the second upper wall 222, the first lower wall 225, and the second lower wall 226. Herein, the first upper wall 221 forms a left upper end portion of the passage opening 211. The second upper wall 222 forms a right upper end portion of the passage opening 211. The first lower wall 225 forms a left lower end portion of the passage opening 211. The second lower wall 226 forms a right lower end portion of the passage opening 211.

In this preferred embodiment, as illustrated in FIG. 2, the adapter 6 is attached to the workpiece 5. As illustrated in FIG. 9, the workpiece 5 is stored in the storage portion 210 with the adapter 6 attached thereto. Herein, as illustrated in FIG. 2, a fitting hole 6a having a circular shape is formed in the adapter 6. The workpiece 5 is fitted (for example, approximately fitted) to the fitting hole 6a, and thus, is attached to the adapter 6. Herein, the workpiece 5 is inserted and fixed in the fitting hole 6a by pressing down the adapter 6 against the workpiece 5. The workpiece 5 will hereinafter refer to the workpiece including the adapter 6, unless otherwise stated. A left portion, a right portion, an upper portion, and a lower portion of the workpiece 5 respectively refer to a left portion, a right portion, an upper portion, and a lower portion of the workpiece 5 including the adapter 6 in a state where the adapter 6 is attached to the workpiece 5. Therefore, when the left portion, the right portion, the upper portion, and the lower portion of the workpiece 5 are indicated, each of the left portion, the right portion, the upper portion, and the lower portion can be a portion of the adapter 6.

In this preferred embodiment, as illustrated in FIG. 3, the workpiece 5 includes a left end portion 5a, a right end portion 5b, a first portion 5c, and a second portion 5d. The left end portion 5a and the right end portion 5b are aligned in the left-right direction (herein, the Y-axis direction D2). The first portion 5c and the second portion 5d are aligned in the up-down direction (herein, the Z-axis direction D3). Herein, a portion of the workpiece 5 that protrudes more upward than the left end portion 5a and the right end portion 5b is referred to as the first portion 5c. In this preferred embodiment, the first portion 5c is an upper portion of the adapter 6. A portion of the workpiece 5 that protrudes more downward than the left end portion 5a and the right end portion 5b is referred to as the second portion 5d. In this preferred embodiment, the second portion 5d is a lower portion of the adapter 6. Herein, the left end portion 5a is a portion of the workpiece 5 that protrudes more leftward than the first portion 5c and the second portion 5d. The right end portion 5b is a portion of the workpiece 5 that protrudes more rightward than the first portion 5c and the second portion 5d. Herein, the left end portion 5a is a left end portion of the adapter 6. The right end portion 5b is a right end portion of the adapter 6. Note that, in the workpiece 5, left, right, up, down, front, and rear are left, right, up, down, front, and rear of the workpiece 5, respectively, in a state where the workpiece 5 is arranged in a proper direction with respect to the storage portion 210.

In this preferred embodiment, as illustrated in FIG. 3 and FIG. 8, when the workpiece 5 passes through the passage opening 211 of the storage portion 210, the left end portion 5a of the workpiece 5 passes between the first upper wall 221 and the first lower wall 225. At this time, the right end portion 5b of the workpiece 5 passes between the second upper wall 222 and the second lower wall 226. When the workpiece 5 passes through the passage opening 211, the first portion 5c of the workpiece 5 passes between the first upper wall 221 and the second upper wall 222 and the second portion 5d of the workpiece 5 passes between the first lower wall 225 and the second lower wall 226.

In this preferred embodiment, as illustrated in FIG. 8, a first distance D11 between the first upper wall 221 and the first lower wall 225 in the Z-axis direction D3 is different from a second distance D12 between the second upper wall 222 and the second lower wall 226 in the Z-axis direction D3. Herein, the first distance D11 is shorter than the second distance D12. Herein, a height of a lower end of the first upper wall 221 and a height of a lower end of the second upper wall 222 are different from each other. Specifically, the lower end of the first upper wall 221 is arranged above the lower end of the second upper wall 222. A height of an upper end of the first lower wall 225 and a height of an upper end of the second lower wall 226 are the same.

In this preferred embodiment, a first length L11 of the left end portion 5a of the workpiece 5 in the Z-axis direction D3 is different from a second length L12 of the right end portion 5b of the workpiece 5 in the Z-axis direction D3. Herein, the first length L11 is shorter than the second length L12. Positions of respective lower ends of the left end portion 5a and the right end portion 5b of the workpiece 5 in the Z-axis direction D3 are the same. Positions of respective upper ends of the left end portion 5a and the right end portion 5b in the Z-axis direction D3 are different from each other. Herein, the upper end of the left end portion 5a is arranged below the upper end of the right end portion 5b. Herein, as illustrated in FIG. 3 and FIG. 8, the first length L11 is shorter than the first distance D 11. The second length L12 is shorter than the second distance D12. Therefore, when the workpiece 5 is caused to pass through the passage opening 211, the left end portion 5a of the workpiece 5 can be caused to pass between the first upper wall 221 and the first lower wall 225 and the right end portion 5b of the workpiece 5 can be caused to pass between the second upper wall 222 and the second lower wall 226.

In the preferred embodiment, longer one of the first length L11 and the second length L12 (herein, the second length L12 of the right end portion 5b) is longer than shorter one of the first distance D11 and the second distance D12 (herein, the first distance D1 1 between the first upper wall 221 and the first lower wall 225). Therefore, when the workpiece 5 is going to be inserted in the passage opening 211 in a direction in which the workpiece 5 is inverted in the left-right direction, the right end portion 5b of the workpiece 5 abuts on the first upper wall 221 and the first lower wall 225, and the right end portion 5b cannot pass between the first upper wall 221 and the first lower wall 225. Accordingly, it can be prevented in advance that the workpiece 5 passes through the passage opening 211 in the direction in which the workpiece 5 is inverted in the left-right direction.

Note that the first distance D11 may be longer than the second distance D12. In this case, the first length L11 of the left end portion 5a of the workpiece 5 may be longer than the second length L12 of the right end portion 5b. At this time, the first length L1 1 may be longer than the second distance D12. Even in this case, it can be prevented in advance that the workpiece 5 passes through the passage opening 211 in the direction in which the workpiece 5 is inverted in the left-right direction.

In this preferred embodiment, as illustrated in FIG. 8, a first left-right distance D13 between the first upper wall 221 and the second upper wall 222 in the left-right direction (herein, the Y-axis direction D2) is different from a second left-right distance D14 between the first lower wall 225 and the second lower wall 226 in the left-right direction (herein, the Y-axis direction D2). Herein, the first left-right distance D13 refers to a distance in the Y-axis direction D2 in a portion of each of the first upper wall 221 and the second upper wall 222 through which the first portion 5c of the workpiece 5 passes. Similarly, the second left-right distance D14 refers to a distance in the Y-axis direction D2 in a portion of each of the first lower wall 225 and the second lower wall 226 through which the second portion 5d of the workpiece 5 passes. Herein, the first left-right distance D13 is longer than the second left-right distance D14. In this preferred embodiment, as illustrated in FIG. 3, a first left-right length L13 of the first portion 5c of the workpiece 5 in the left-right direction (herein, the Y-axis direction D2) is different from the second left-right length L14 of the second portion 5d of the workpiece 5 in the left-right direction (herein, the Y-axis direction D2). Herein, the first left-right length L13 is longer than the second left-right length L14.

Herein, as illustrated in FIG. 3 and FIG. 8, the first left-right length L13 is shorter than the first left-right distance D13. The second left-right length L14 is shorter than the second left-right distance D14. Therefore, when the workpiece 5 is caused to pass through the passage opening 211, the first portion 5c of the workpiece 5 can be caused to pass between the first upper wall 221 and the second upper wall 222 and the second portion 5d of the workpiece 5 can be caused to pass between the first lower wall 225 and the second lower wall 226.

In this preferred embodiment, longer one of the first left-right length L13 and the second left-right length L14 (herein, the first left-right length L13 of the first portion 5c) is longer than shorter one of the first left-right distance D13 and the second left-right distance D14 (herein, the second left-right distance D14 between the first lower wall 225 and the second lower wall 226). Therefore, when the workpiece 5 is going to be inserted in the passage opening 211 in the direction in which the workpiece 5 is inverted in the front-rear direction, the first portion 5c of the workpiece 5 abuts on the first lower wall 225 and the second lower wall 226 and the first portion 5c cannot pass between the first lower wall 225 and the second lower wall 226. Accordingly, it can be prevented in advance that the workpiece 5 passes through the passage opening 211 in the direction in which the workpiece 5 is inverted in the front-rear direction.

Note that the first left-right distance D13 may be shorter than the second left-right distance D14. In this case, the first left-right length L13 of the first portion 5c of the workpiece 5 may be shorter than the second left-right length L14 of the second portion 5d. At this time, the second left-right length L14 may be longer than the first left-right distance D13. Even in this case, it can be prevented in advance that the workpiece 5 passes through the passage opening 211 in the direction in which the workpiece 5 is inverted in the front-rear direction.

As illustrated in FIG. 11, the passage 213 is a passage through which the workpiece 5 that has passed through the passage opening 211 passes. The passage 213 communicates with the passage opening 211. Herein, the passage 213 is arranged in rear of the passage opening 211. The passage 213 extends rearward from the passage opening 211.

The mounting portion 215 is a portion on which the workpiece 5 is mounted and is fixed in the storage portion 210. A position of the workpiece 5 in the X-axis direction D1 and the Y-axis direction D2 is fixed on the mounting portion 215. As illustrated in FIG. 11, the mounting portion 215 is arranged below the passage 213 and more rearward than the passage opening 211. Therefore, the workpiece 5 that has passed through the passage 213 moves downward due to its own weight and is supported by the mounting portion 215, and the position of the workpiece 5 in the X-axis direction D1 and the Y-axis direction D2 is fixed.

In this preferred embodiment, as illustrated in FIG. 10, the mounting portion 215 includes a first mounting member 231 and a second mounting member 232. The first mounting member 231 is arranged in rear of the first lower wall 225 and extends in the front-rear direction (herein, the X-axis direction D1). The left end portion 5a (see FIG. 3) of the workpiece 5 is mounted on the first mounting member 231. The second mounting member 232 is arranged to be aligned with the first mounting member 231 in the Y-axis direction D2 and, herein, is arranged at right of the first mounting member 231. The second mounting member 232 is arranged in rear of the second lower wall 226 and extends in the front-rear direction (herein, the X-axis direction D1). The right end portion 5b (see FIG. 3) of the workpiece 5 is mounted on the second mounting member 232.

In this preferred embodiment, as illustrated in FIG. 11, the storage portion 210 includes the inclined surface 240. The inclined surface 240 is a surface that guides the workpiece 5 that has passed through the passage opening 211 toward the mounting portion 215 and contacts a lower surface of the workpiece 5. The inclined surface 240 is arranged below the passage 213 (specifically, below a front portion of the passage 213). The inclined surface 240 is arranged at a side closer to the passage opening 211 than the mounting portion 215. The inclined surface 240 is arranged between the passage opening 211 and the mounting portion 215. The inclined surface 240 is inclined downward as receding from the passage opening 211, in other words, as proceeding to the mounting portion 215 from the passage opening 211.

In this preferred embodiment, as illustrated in FIG. 10, the inclined surface 240 includes a first inclined surface 241 and a second inclined surface 242. The first inclined surface 241 can contact one end (herein, the left end portion 5a) of the workpiece 5 in a width direction (herein, the Y-axis direction D2). The first inclined surface 241 is formed on an upper surface of the first lower wall 225. The first inclined surface 241 is inclined downward as proceeding to a rear end of the first lower wall 225 (in other words, the first mounting member 231) from a front end of the first lower wall 225. The second inclined surface 242 is arranged at right of the first inclined surface 241. The second inclined surface 242 can contact the other end (herein, the right end portion 5b) of the workpiece 5 in the width direction (herein, the Y-axis direction D2). The second inclined surface 242 is formed at an upper surface of the second lower wall 226. The second inclined surface 242 is inclined downward as proceeding to a rear end of the second lower wall 226 (in other words, the second mounting member 232) from a front end of the second lower wall 226.

In this preferred embodiment, as illustrated in FIG. 10, the storage portion 210 includes a positioning mechanism 217. The positioning mechanism 217 determines the position of the workpiece 5 on the mounting portion 215. Herein, the position of the workpiece 5 relative to the mounting portion 215 in the X-axis direction D1 and the Y-axis direction D2 is determined by the positioning mechanism 217 and movement of the workpiece 5 in the X-axis direction D1 and the Y-axis direction D2 is regulated.

There is no particular limitation on a configuration of the positioning mechanism 217. Herein, as illustrated in FIG. 2, the workpiece 5 includes a recessed portion 7 that is recessed inward from an end of the workpiece 5 in the left-right direction (herein, the Y-axis direction D2). The recessed portion 7 is formed in the adapter 6 of the workpiece 5 and is arranged in a front portion of the workpiece 5. Herein, the recessed portion 7 includes a first recessed portion 7a and a second recessed portion 7b. The first recessed portion 7a is formed in the left end portion 5a of the workpiece 5 and is recessed inward (herein, rightward) from a left end of the workpiece 5. The second recessed portion 7b is formed in the right end portion 5b of the workpiece 5 and is recessed inward (herein, leftward) from a right end of the workpiece 5.

In this preferred embodiment, as illustrated in FIG. 10, the positioning mechanism 217 includes a raised portion 260. As illustrated in FIG. 12, the raised portion 260 is fitted in the recessed portion 7 of the workpiece 5. Herein, the raised portion 260 includes a first raised portion 261 and a second raised portion 262. The first raised portion 261 and the second raised portion 262 are arranged to be aligned with each other in the left-right direction (herein, the Y-axis direction D2). Herein, the first raised portion 261 is formed on the first lower wall 225 and the second raised portion 262 is formed on the second lower wall 226. Specifically, the first raised portion 261 protrudes from the first lower wall 225 rightward toward the second lower wall 226 herein. The second raised portion 262 protrudes from the second lower wall 226 leftward toward the first lower wall 225 herein. The first raised portion 261 is arranged below at least a portion of the first inclined surface 241 and the second raised portion 262 is arranged below at least a portion of the second inclined surface 242. Herein, when the workpiece 5 is mounted on the mounting portion 215, the first raised portion 261 is fitted in the first recessed portion 7a of the workpiece 5. The second raised portion 262 is fitted in the second recessed portion 7b of the workpiece 5. Thus, movement of the workpiece 5 relative to the mounting portion 215 in the X-axis direction D1 and the Y-axis direction D2 is regulated and the position of the workpiece 5 is fixed.

In this preferred embodiment, as illustrated in FIG. 12, the stocker 200 includes a stopper wall 270. The stopper wall 270 prevents the workpiece 5 from moving more rearward than the mounting portion 215. The stopper wall 270 is arranged more distant from the passage opening 211 than the mounting portion 215 of the storage portion 210 at an opposite side to the passage opening 211. Herein, the stopper wall 270 is arranged more rearward than the mounting portion 215. As illustrated in FIG. 7, the stopper wall 270 is not provided to the stocker body 201 but is provided to the stocker cover 202. Therefore, the stopper wall 270 is not configured to move with the stocker body 201 and the storage portion 210 between the storage area AR1 and the processing area AR2 and is arranged in the storage area AR1.

Herein, the stopper wall 270 forms a rear surface of the stocker cover 202 and expands in the Y-axis direction D2 and the Z-axis direction D3. In the storage area AR1, in a state where the stocker body 201 is covered with the stocker cover 202, as illustrated in FIG. 12, the stopper wall 270 is arranged in rear of the storage portion 210. In this preferred embodiment, one common stopper wall 270 corresponds to multiple storage portions 210. The stopper wall 270 extends throughout the multiple storage portions 210 in the Z-axis direction D3. Herein, a length of the stopper wall 270 in the Z-axis direction D3 is longer than a distance from the storage portion 210 arranged uppermost to the storage portion 210 arranged lowermost. In this preferred embodiment, in the storage area AR1, when the workpiece 5 moves more rearward than the mounting portion 215 in storing the workpiece 5 in the storage portion 210, the workpiece 5 abuts on the stopper wall 270. Therefore, the workpiece 5 does not move more rearward than the mounting portion 215 and is mounted on the mounting portion 215.

The configuration of the stocker 200 according to this preferred embodiment has been described above. Herein, when the user manually stores the workpiece 5 in the storage portion 210 of the stocker 200, as illustrated in FIG. 6, the user first arranges the stocker 200 in the storage area AR1. Then, as illustrated in FIG. 1, the user operates the door 12 supported by the case body 10 to open the opening 11. This makes the storage portion 210 of the stocker 200 accessible from front. In this state, in the storage area AR1, the user grasps the workpiece 5 with a hand and inserts the workpiece 5 in the passage opening 211. The workpiece 5 inserted in the passage opening 211 passes through the passage 213 to head to the mounting portion 215 while sliding on the inclined surface 240, as illustrated in FIG. 11. Thereafter, the workpiece 5 moves toward the mounting portion 215 due to its own weight and is mounted on the mounting portion 215.

When the workpiece 5 sliding on the inclined surface 240 is going to go over the mounting portion 215 to move more rearward than the mounting portion 215, as illustrated in FIG. 12, the workpiece 5 abuts on the stopper wall 270 and movement of the workpiece 5 rearward is regulated. When the workpiece 5 is mounted on the mounting portion 215, the raised portion 260 of the positioning mechanism 217 is fitted in the recessed portion 7 of the workpiece 5. Thus, a position of the workpiece 5 relative to the mounting portion 215 is determined.

At the time when the user takes out the workpiece 5 from the storage portion 210, the user first grasps the front portion of the workpiece 5 stored in the storage portion 210 with a hand. Thereafter, the user moves the workpiece 5 more upward than the mounting portion 215. At this time, fitting of the raised portion 260 of the positioning mechanism 217 and the recessed portion 7 of the workpiece 5 is released. Thereafter, the user pulls the workpiece 5 toward the user. At this time, the user pulls the workpiece 5 obliquely upward along the inclined surface 240, for example, until the workpiece 5 abuts on the first upper wall 221 and the second upper wall 222. After the workpiece 5 abuts on the first upper wall 221 and the second upper wall 222, the workpiece 5 can be taken out from the storage portion 210 by causing the workpiece 5 to pass through the passage opening 211.

As described above, in this preferred embodiment, the cutting machine 100 is a machine that cuts the workpiece 5. As illustrated in FIG. 5, the cutting machine 100 includes the stocker 200. The stocker 200 stores the workpiece 5. The stocker 200 includes the stocker body 201 and the storage portion 210 that is arranged in the stocker body 201 and in which one workpiece 5 is stored. As illustrated in FIG. 10, the storage portion 210 includes the passage opening 211, the passage 213, and the mounting portion 215. The passage opening 211 is opened in the predetermined opening direction (herein, the forward direction) and the workpiece 5 passes through the passage opening 211. The passage 213 communicates with the passage opening 211 and the workpiece 5 that has passed through the passage opening 211 passes through the passage 213. The mounting portion 215 is provided below the passage 213 and the workpiece 5 is mounted on the mounting portion 215 so that the position of the workpiece 5 is fixed. Thus, at the time when the user manually stores the workpiece 5 in the storage portion 210, the user inserts the workpiece 5 in the storage portion 210 from the passage opening 211 of the storage portion 210 in a state where the user grasps the workpiece 5 with a hand. At this time, the workpiece 5 that has passed through the passage opening 211 passes through the passage 213 in the storage portion 210. Then, in a state where the workpiece 5 passes through the passage 213, the user releases the hand from the workpiece 5. Thus, the workpiece 5 is fixed in a state where the workpiece 5 has moved downward to be mounted on the mounting portion 215. Accordingly, the user can store the workpiece 5 in the storage portion 210 with needing a less force than in a conventional case. Therefore, the workpiece 5 can be easily manually stored in the storage portion 210.

In this preferred embodiment, as illustrated in FIG. 11, the storage portion 210 includes the inclined surface 240. The inclined surface 240 is arranged below the passage 213 and at the side closer to the passage opening 211 than the mounting portion 215. The inclined surface 240 is inclined downward as receding from the passage opening 211. Thus, the workpiece 5 that has passed through the passage opening 211 easily moves toward the mounting portion 215 while sliding on the inclined surface 240.

In this preferred embodiment, the workpiece 5 is formed in a plate shape. As illustrated in FIG. 10, the inclined surface 240 includes the first inclined surface 241 that can contact one end (herein, the left end portion 5a (see FIG. 3)) of the workpiece 5 in the width direction (herein, the Y-axis direction D2) and the second inclined surface 242 that can contact the other end (herein, the right end portion 5b (see FIG. 3)) of the workpiece 5 in the width direction. Thus, in the workpiece 5, both the ends thereof in the width direction are supported by the first inclined surface 241 and the second inclined surface 242, and therefore, the workpiece 5 can be moved toward the mounting portion 215 while being stabilized.

In this preferred embodiment, as illustrated in FIG. 12, the stocker 200 includes the stopper wall 270 that is arranged more distant from the passage opening 211 than the mounting portion 215 of the storage portion 210 at an opposite side to the passage opening 211 and on which the workpiece 5 can abut. Thus, even when the workpiece 5 that has passed through the passage opening 211 is going to go over the mounting portion 215, the workpiece 5 abuts on the stopper wall 270, so that movement of the workpiece 5 is regulated. Accordingly, the workpiece 5 can be prevented from going over the mounting portion 215.

In this preferred embodiment, as illustrated in FIG. 5, multiple storage portions 210 are provided so as to be aligned in the up-down direction (herein, the Z-axis direction D3) in the stocker body 201. The stopper wall 270 extends throughout the multiple storage portions 210 in the up-down direction (herein, the Z-axis direction D3). Thus, in the multiple storage portions 210, the workpiece 5 can be prevented from going over the mounting portion 215 by one stopper wall 270.

In this preferred embodiment, as illustrated in FIG. 10, the storage portion 210 includes the positioning mechanism 217 that determines the position of the workpiece 5 in the mounting portion 215. The workpiece 5 can be arranged in a proper position on the mounting portion 215 by the positioning mechanism 217.

In this preferred embodiment, as illustrated in FIG. 2, the workpiece 5 includes the recessed portion 7 that is recessed inward from an end of the workpiece 5 in the left-right direction (herein, the Y-axis direction D2). As illustrated in FIG. 12, the positioning mechanism 217 includes the raised portion 260 that is fitted in the recessed portion 7. Thus, the workpiece 5 can be arranged in a proper position on the mounting portion 215 by a simple method in which the raised portion 260 of the positioning mechanism 217 is fitted in the recessed portion 7 of the workpiece 5.

In this preferred embodiment, as illustrated in FIG. 2, the workpiece 5 includes the first recessed portion 7a that is recessed rightward from the left end of the workpiece 5 and the second recessed portion 7b that is recessed leftward from the right end of the workpiece 5. As illustrated in FIG. 12, the positioning mechanism 217 includes the first raised portion 261 that is fitted in the first recessed portion 7a and the second raised portion 262 that is fitted in the second recessed portion 7b. Thus, at both the left and right ends of the workpiece 5, the first recessed portion 7a is fitted in the first raised portion 261 and the second recessed portion 7b is fitted in the second raised portion 262. Accordingly, positioning is performed at both the left and right ends of the workpiece 5, and therefore, the workpiece 5 can be arranged in a more proper position.

In the preferred embodiment, as illustrated in FIG. 8 and FIG. 9, the storage portion 210 includes the first upper wall 221 that forms the left upper end portion of the passage opening 211, the second upper wall 222 that forms the right upper end portion of the passage opening 211, the first lower wall 225 that forms the left lower end portion of the passage opening 211 and is opposed to the first upper wall 221, and the second lower wall 226 that forms the right lower end portion of the passage opening 211 and is opposed to the second upper wall 222. As illustrated in FIG. 8, the first distance D11 between the first upper wall 221 and the first lower wall 225 in the up-down direction (herein, the Z-axis direction D3) is different from the second distance D12 between the second upper wall 222 and the second lower wall 226 in the Z-axis direction D3. As illustrated in FIG. 3, the first length L11 of the left end portion 5a of the workpiece 5 in the up-down direction (herein, the Z-axis direction D3) is different from the second length L12 of the right end portion 5b of the workpiece 5 in the Z-axis direction D3. Herein, the first length L11 is shorter than the first distance D11. The second length L12 is shorter than the second distance D12. Longer one of the first length L11 and the second length L12 (herein, the second length L12) is longer than shorter one of the first distance D11 and the second distance D12 (herein, the first distance D11). The height of the lower end of the first upper wall 221 and the height of the lower end of the second upper wall 222 are different from each other. As described above, a dimensional relation between the first distance D11, the second distance D12, the first length L11, and the second length L12 is set as described above, so that, when the workpiece 5 is directed in a correct direction, the workpiece 5 can be caused to pass through the passage opening 211. On the other hand, when the workpiece 5 is going to be inserted in the passage opening 211 in the direction in which the workpiece 5 is inverted in the left-right direction, the workpiece 5 abuts on at least one of the first upper wall 221, the second upper wall 222, the first lower wall 225, and the second lower wall 226 and cannot pass through the passage opening 211. Accordingly, it can be prevented in advance that the workpiece 5 passes through the passage opening 211 in the direction in which the workpiece 5 is inverted in the left-right direction.

In this preferred embodiment, as illustrated in FIG. 8, the first left-right distance D13 between the first upper wall 221 and the second upper wall 222 in the left-right direction (herein, the Y-axis direction D2) is different from the second left-right distance D14 between the first lower wall 225 and the second lower wall 226 in the Y-axis direction D2. As illustrated in FIG. 3 and FIG. 8, the workpiece 5 includes the first portion 5c that passes between the first upper wall 221 and the second upper wall 222 and the second portion 5d that passes between the first lower wall 225 and the second lower wall 226. As illustrated in FIG. 3, the first left-right length L13 of the first portion 5c of the workpiece 5 in the left-right direction (herein, the Y-axis direction D2) is different from the second left-right length L14 of the second portion 5d of the workpiece 5 in the Y-axis direction D2. As illustrated in FIG. 3 and FIG. 8, the first left-right length L13 is shorter than the first left-right distance D13. The second left-right length L14 is shorter than the second left-right distance D14. Longer one of the first left-right length L13 and the second left-right length L14 (herein, the first left-right length L13) is longer than shorter one of the first left-right distance D13 and the second left-right distance D14 (herein, the second left-right distance D14). As described above, a dimensional relation between the first left-right distance D13, the second left-right distance D14, the first left-right length L13, and the second left-right length L14 is set as described above, so that, when the workpiece 5 is directed in a correct direction, the workpiece 5 can be caused to pass through the passage opening 211. On the other hand, when the workpiece 5 is going to be inserted in the passage opening 211 in the direction in which the workpiece 5 is inverted in the up-down direction, the workpiece 5 abuts on at least one of the first upper wall 221, the second upper wall 222, the first lower wall 225, and the second lower wall 226 and cannot pass through the passage opening 211. Accordingly, it can be prevented in advance that the workpiece 5 passes through the passage opening 211 in the direction in which the workpiece 5 is invented in the up-down direction.

### REFERENCE SIGNS LIST

- 5: Workpiece
- 5 a: Left end portion
- 5b: Right end portion
- 5c: First portion
- 5d: Second portion
- 7: Recessed portion
- 7a: First recessed portion
- 7b: Second recessed portion
- 100: Cutting machine
- 200: Stocker
- 201: Stocker body
- 210: Storage portion
- 211: Passage opening
- 213: Passage
- 215: Mounting portion
- 217: Positioning mechanism
- 221: First upper wall
- 222: Second upper wall
- 225: First lower wall
- 226: Second lower wall
- 240: Inclined surface
- 241: First inclined surface
- 242: Second inclined surface
- 260: Raised portion
- 261: First raised portion
- 262: Second raised portion
- 270: Stopper wall

## Claims

1. A stocker in which a workpiece is stored in a cutting machine that cuts the workpiece, the stocker comprising:
a stocker body; and
a storage portion that is arranged in the stocker body and in which one workpiece is stored,
wherein
the storage portion includes
a passage opening that is opened in a predetermined opening direction and through which the workpiece passes,
a passage that communicates with the passage opening and through which the workpiece that has passed through the passage opening passes, and
a mounting portion that is provided below the passage and on which the workpiece is mounted so that a position of the workpiece is fixed.

2. The stocker according to claim 1,
wherein
the storage portion is arranged below the passage and at a side closer to the passage opening than the mounting portion and includes an inclined surface that is inclined downward as receding from the passage opening.

3. The stocker according to claim 2,
wherein
the workpiece is formed in a plate shape, and
the inclined surface includes
a first inclined surface that can contact one end of the workpiece in a width direction, and
a second inclined surface that can contact the other end of the workpiece in the width direction.

4. The stocker according to any one of claims 1 to 3, comprising:
a stopper wall that is arranged more distant from the passage opening than the mounting portion of the storage portion at an opposite side to the passage opening and the workpiece can contact.

5. The stocker according to claim 4,
wherein
as the storage portion, multiple storage portions are provided so as to be aligned in an up-down direction in the stocker body, and
the stopper wall extends throughout the multiple storage portions in the up-down direction.

6. The stocker according to any one of claims 1 to 5,
wherein
the storage portion includes a positioning mechanism that determines a position of the workpiece on the mounting portion.

7. The stocker according to claim 6,
wherein
the workpiece includes a recessed portion that is recessed inward from an end of the workpiece in a left-right direction, and
the positioning mechanism includes a raised portion that is fitted in the recessed portion.

8. The stocker according to claim 6 or 7,
wherein
the workpiece includes
a first recessed portion that is recessed rightward from a left end of the workpiece, and
a second recessed portion that is recessed leftward from a right end of the workpiece,
the positioning mechanism includes
a first raised portion that is fitted in the first recessed portion, and
a second raised portion that is fitted in the second recessed portion.

9. The stocker according to any one of claims 1 to 8,
wherein
the storage portion includes
a first upper wall that forms a left upper end portion of the passage opening,
a second upper wall that forms a right upper end portion of the passage opening,
a first lower wall that forms a left lower end portion of the passage opening and is opposed to the first upper wall, and
a second lower wall that forms a right lower end portion of the passage opening and is opposed to the second upper wall,
a first distance between the first upper wall and the first lower wall in the up-down direction is difference from a second distance between the second upper wall and the second lower wall in the up-down direction,
a first length of a left end portion of the workpiece in the up-down direction is different from a second length of a right end portion of the workpiece in the up-down direction,
the first length is shorter than the first distance,
the second length is shorter than the second distance, and
longer one of the first length and the second length is longer than shorter one of the first distance and the second distance.

10. The stocker according to claim 9,
wherein
a height of a lower end of the first upper wall and a height of a lower end of the second upper wall are different from each other.

11. The stocker according to any one of claims 1 to 8,
wherein
the storage portion includes
a first upper wall that forms a left upper end portion of the passage opening,
a second upper wall that forms a right upper end portion of the passage opening,
a first lower wall that forms a left lower end portion of the passage opening and is opposed to the first upper wall, and
a second lower wall that forms a right lower end portion of the passage opening and is opposed to the second upper wall,
a first left-right distance between the first upper wall and the second upper wall in a left-right direction is different from a second left-right distance between the first lower wall and the second lower wall in the left-right direction,
the workpiece includes
a first portion that passes between the first upper wall and the second upper wall, and
a second portion that passes between the first lower wall and the second lower wall,
a first left-right length of the first portion in the left-right direction is different from a second left-right length of the second portion in the left-right direction,
the first left-right length is shorter than the first left-right distance,
the second left-right length is shorter than the second left-right distance, and
longer one of the first left-right length and the second left-right length is longer than shorter one of the first left-right distance and the second left-right distance.

12. A cutting machine comprising:
the stocker according to any one of claims 1 to 11,
wherein
the cutting machine cuts a workpiece.
